# EUROPEAN PATENT APPLICATION

(11) **EP 3 587 207 A1**
(43) Date of publication of application: **01.01.2020**
(21) Application number: 19180231.3
(22) Date of filing: 14.06.2019
(51) Int. Cl.: B60W 30/045, B60W 10/06, B60W 10/08, B60W 10/18, B60W 10/184

(54) **VEHICLE CONTROL METHOD AND VEHICLE SYSTEM**

(30) Priority: 22.06.2018 JP 2018119090
(71) Applicant: Mazda Motor Corporation, Aki-gun, Hiroshima 730-8670 (JP)
(72) Inventor: OGAWA, Daisaku, Hiroshima 730-8670 (JP); UMETSU, Daisuke, Hiroshima 730-8670 (JP); KATO, Fuminori, Hiroshima 730-8670 (JP)
(74) Representative: Thoma, Michael

(57) **Abstract**

A method of controlling a vehicle (1) in which rear road wheels (2) are driven by a prime mover (4, 20). This vehicle control method comprises: a basic torque setting step of setting, based on a driving state of the vehicle, a basic torque to be generated by the prime mover; an incremental torque setting step of setting an incremental torque such that the basic torque is increased in accordance with an increase in steering angle of a steering device (26) equipped in the vehicle; and a torque generation step of controlling the prime mover to generate a torque which is determined by increasing the basic torque based on the incremental torque.

## Description

### BACKGROUND OF THE INVENTION

### Field of the Invention

The present invention relates to a vehicle control method and a vehicle system, and more particularly to a vehicle control method and a vehicle system for a vehicle comprising a set of road wheels including drive wheels, a prime mover (power source / power generator) operable to generate a torque for driving the drive wheels, and a braking device operable to apply a braking force to the set of road wheels.

### Description of Related Art

Heretofore, there has been known a technique of, in a situation where the behavior of a vehicle becomes unstable due to road wheel slip or the like, controlling the vehicle behavior to enable a safe traveling (e.g., an antiskid brake device). Specifically, there has been known a technique of detecting the occurrence of vehicle understeer or oversteer behavior during vehicle cornering or the like, and responsively giving appropriate deceleration to one or more road wheels so as to suppress such a behavior.

As a different type of control from the above control for improving safety in a traveling condition causing the vehicle behavior to become unstable, there has been known a vehicle motion control device operable to automatically perform acceleration or deceleration of a vehicle in association with the manipulation of a steering wheel which is started from a usual driving region, to thereby reduce skid in a marginal driving region, (see JP 5143103B (Patent Document 1), for example).

### BRIEF SUMMURY OF THE INVENTION

### Technical Problem

The control described in the Patent Document 1 is configured to, typically when steering angle is increasing (i.e., when turning manipulation of the steering wheel is being performed), give deceleration to the vehicle to increase a vertical load on front road wheels of the vehicle, thereby improving cornering performance during the turning manipulation.

The present inventor tried to apply, to a rear-wheel-drive vehicle, the control of giving deceleration to a vehicle along steering of the vehicle, as described in the Patent Document 1. As a result, however, effects achieved in the invention described in the Patent Document 1, such as improvement in steering stability, responsiveness of vehicle behavior, and linear feeling, could not be obtained.

Specifically, in a rear-wheel-drive vehicle, when a generation torque of a prime mover (driving source) is reduced so as to give deceleration to the vehicle along with steering of the vehicle, the reduced torque is transmitted to rear road wheels as drive wheels to become a force causing the rear road wheels to be pulled rearwardly with respect to the vehicle. When this force is transmitted from the rear road wheels to a vehicle body of the vehicle via a suspension, a force instantaneously acts which causes a rear end of the vehicle body to be sunk downwardly, and thus a moment arises which has a direction causing the vehicle body to be tilted rearwardly, so that a force acts which causes a front end of the vehicle body to be lifted upwardly, and, due to the lifting of the front end of the vehicle body, a load on front road wheels (front road wheel load) is reduced. That is, it was found that an undesirable change in vehicle attitude occurs against the intention of increasing the vertical load on the front road wheels of the vehicle to improve the cornering performance during the turning manipulation.

The present invention has been made to solve the above conventional problem, and an object thereof is to provide a vehicle control method and a vehicle system capable of, even when controlling a vehicle in which rear road wheels are driven by a prime mover, improving vehicle responsiveness or linear feeling with respect to steering manipulation.

### Solution to Problem

In order to achieve the object, according to one aspect of the present invention, there is provided a method of controlling a vehicle in which rear road wheels among a set of road wheels are driven by a prime mover. This vehicle control method comprises: a basic torque setting step of setting, based on a driving state of the vehicle, a basic torque to be generated by the prime mover; an incremental torque setting step of setting an incremental torque such that the basic torque is increased in accordance with an increase in steering angle of a steering device equipped in the vehicle; and a torque generation step of controlling the prime mover to generate a torque which is determined by increasing the basic torque based on the incremental torque.

In the vehicle control method of the present invention having the above feature, the incremental torque is set such that the basic torque is increased in accordance with an increase in the steering angle of the steering device, and the prime mover is controlled to generate a torque which is determined by increasing the basic torque based on the incremental torque. Thus, upon an increase in the steering angle of the steering device, a drive torque for the rear road wheels is increased to generate a force causing the rear road wheels to be pulled rearwardly. When this force is transmitted from the rear road wheels to a vehicle body of the vehicle via a suspension, a force instantaneously acts which causes a rear end of the vehicle body to be lift upwardly, and thus a moment arises which has a direction causing the vehicle body to be tilted forwardly, so that a force causing the vehicle body to be tilted forwardly can be generated to improve vehicle responsiveness and linear feeling with respect to turning manipulation of a steering wheel. Therefore, even when controlling a vehicle in which rear road wheels are driven by a prime mover, it becomes possible to improve vehicle responsiveness or linear feeling with respect to steering manipulation.

Preferably, in the vehicle control method of the present invention, the prime mover is an internal combustion engine comprising an injector, wherein the torque generation step includes controlling a fuel injection amount of the injector, such that the internal combustion engine generates a torque which is determined by increasing the basic torque based on the incremental torque.

According to this feature, the vehicle responsiveness and linear feeling with respect to turning manipulation of the steering wheel can be improved by controlling the fuel injection amount of the injector to cause the internal combustion engine to generate a torque which is determined by increasing the basic torque based on the incremental torque.

Preferably, in the above vehicle control method, the internal combustion engine further comprises a throttle valve, wherein the torque generation step includes controlling an opening angle of the throttle value, such that the internal combustion engine generates a torque which is determined by increasing the basic torque based on the incremental torque.

According to this feature, the vehicle responsiveness and linear feeling with respect to turning manipulation of the steering wheel can be improved by controlling the opening angle of the throttle value to cause the internal combustion engine to generate a torque which is determined by increasing the basic torque based on the incremental torque.

Preferably, in the above vehicle control method, the internal combustion engine further comprises a variable valve mechanism, wherein the torque generation step includes controlling a closing timing of an intake valve of the internal combustion engine by the variable valve mechanism, such that the internal combustion engine generates a torque which is determined by increasing the basic torque based on the incremental torque.

According to this feature, the vehicle responsiveness and linear feeling with respect to turning manipulation of the steering wheel can be improved by controlling the closing timing of the intake valve of the internal combustion engine by the variable valve mechanism to cause the internal combustion engine to generate a torque which is determined by increasing the basic torque based on the incremental torque.

Preferably, in the vehicle control method of the present invention, the prime mover is an internal combustion engine comprising a spark plug, wherein the torque generation step includes controlling an ignition timing of the spark plug, such that the internal combustion engine generates a torque which is determined by increasing the basic torque based on the incremental torque.

According to this feature, the vehicle responsiveness and linear feeling with respect to turning manipulation of the steering wheel can be improved by controlling the ignition timing of the spark plug to cause the internal combustion engine to generate a torque which is determined by increasing the basic torque based on the incremental torque.

Preferably, in the vehicle control method of the present invention, the prime mover is an electric motor, wherein the torque generation step includes controlling the electric motor to generate a torque which is determined by increasing the basic torque based on the incremental torque.

According to this feature, the vehicle responsiveness and linear feeling with respect to turning-back manipulation of the steering wheel can be improved by controlling the electric motor to generate a torque which is determined by increasing the basic torque based on the incremental torque.

Preferably, the vehicle control method of the present invention further comprises: a decremental torque setting step of setting a decremental torque such that the basic torque is reduced in accordance with a decrease in the steering angle of the steering device; and a second torque generation step of controlling the prime mover to generate a torque which is determined by reducing the basic torque based on the decremental torque.

According to this feature, the decremental torque is set in accordance with a decrease in the steering angle of the steering device, and the prime mover is controlled to generate a torque which is determined by reducing the basic torque based on the decremental torque. Thus, upon turning-back manipulation of the steering device, a drive torque for the rear road wheels is reduced to generate a force causing the rear road wheels to be pulled rearwardly with respect to the vehicle. When this force is transmitted from the rear road wheels to the vehicle body of the vehicle via the suspension, a force instantaneously acts which causes the rear end of the vehicle body to be sunk downwardly, and thus a moment arises which has a direction causing the vehicle body to be tilted rearwardly, so that a force causing the vehicle body to be tilted rearwardly can be generated to improve vehicle responsiveness and linear feeling with respect to the turning-back manipulation of the steering wheel. Therefore, even when controlling a vehicle in which rear road wheels are driven by a prime mover, it becomes possible to improve vehicle responsiveness or linear feeling with respect to steering manipulation.

More preferably, the above vehicle control method further comprises a decremental torque changing step of changing, based on the incremental torque set in the incremental torque setting step, the decremental torque set in the decremental torque setting step.

According to this feature, based on the incremental torque used when increasing the basic torque in accordance with the increase in the steering angle, the decremental torque set according to a subsequent decrease in the steering angle is changed (corrected), so that it becomes possible to adjust a balance between an improvement in the vehicle responsiveness and linear feeling based on the incremental torque during the turning manipulation of the steering wheel and an improvement in the vehicle responsiveness and linear feeling based on the decremental torque during the turning-back manipulation of the steering wheel, thereby preventing a driver from having a feeling of strangeness.

More preferably, in the above vehicle control method, the decremental torque changing step is performed when the steering angle of the steering device starts to decrease within a given time period after the incremental torque decreases and becomes 0.

According to this feature, when the steering angle of the steering device starts to decrease within a given time period after the incremental torque decreases and becomes 0, control of changing the decremental torque based on the incremental torque is executed, so that it becomes possible to execute the control of changing the decremental torque based on the incremental torque, in a situation where the improvement in the vehicle responsiveness and linear feeling based on the incremental torque during the turning manipulation of the steering wheel can exert an influence on the vehicle responsiveness and linear feeling during the turning-back manipulation of the steering wheel, thereby preventing a driver from having a feeling of strangeness.

More preferably, in the above vehicle control method, the decremental torque changing step includes setting a degree of change of the decremental torque, depending on an elapsed time period since the incremental torque decreases and becomes 0.

According to this feature, the degree of change of the decremental torque is set, depending on the elapsed time period since the incremental torque decreases and becomes 0, so that it becomes possible to execute the control of changing the decremental torque based on the incremental torque, in the situation where the improvement in the vehicle responsiveness and linear feeling based on the incremental torque during the turning manipulation of the steering wheel can exert an influence on the vehicle responsiveness and linear feeling during the turning-back manipulation of the steering wheel, thereby preventing a driver from having a feeling of strangeness.

Preferably, in the vehicle control method of the present invention, the vehicle is further equipped with a braking device configured to apply a braking force to the road wheels, and wherein the method further comprises: a yaw moment instruction value setting step of setting, in accordance with a decrease in the steering angle of the steering device, a yaw moment instruction value corresponding to a yaw moment oriented in a direction opposite to that of a yaw rate being actually generated in the vehicle; and a yaw control step of controlling the braking device based on the yaw moment instruction value.

According to this feature, the yaw moment instruction value indicative of a rotation direction opposite to that of a yaw rate which is actually generated in the vehicle is set in accordance with a decrease in the steering angle of the steering device, and the braking device is controlled based on the yaw moment instruction value. Thus, upon turning-back manipulation of the steering device, a yaw moment oriented in a direction suppressing vehicle-turning can be generated, so that it becomes possible to improve the vehicle responsiveness and linear feeling with respect to turning-back manipulation of the steering wheel.

More preferably, the above vehicle control method further comprises a yaw moment instruction value changing step of changing, based on the incremental torque set in the incremental torque setting step, the yaw moment instruction value set in the yaw moment instruction value setting step.

According to this feature, based on the incremental torque used when increasing the basic torque in accordance with the increase in the steering angle, the yaw moment instruction value set according to a subsequent decrease in the steering angle is changed (corrected), so that it becomes possible to adjust a balance between an improvement in the vehicle responsiveness and linear feeling based on the incremental torque during the turning manipulation of the steering wheel and an improvement in the vehicle responsiveness and linear feeling based on the decremental torque during the turning-back manipulation of the steering wheel, thereby preventing a driver from having a feeling of strangeness.

More preferably, in the above vehicle control method, the yaw moment instruction value changing step is performed when the steering angle of the steering device starts to decrease within a given time period after the incremental torque decreases and becomes 0.

According to this feature, when the steering angle of the steering device starts to decrease within a given time period after the incremental torque decreases and becomes 0, control of changing the yaw moment instruction value based on the incremental torque is executed, so that it becomes possible to execute the control of changing the yaw moment instruction value based on the incremental torque, in a situation where the improvement in the vehicle responsiveness and linear feeling based on the incremental torque during the turning manipulation of the steering wheel can exert an influence on the vehicle responsiveness and linear feeling during the turning-back manipulation of the steering wheel, thereby preventing a driver from having a feeling of strangeness.

More preferably, in the above vehicle control method, the yaw moment instruction value changing step includes setting a degree of change of the yaw moment instruction value, depending on an elapsed time period since the incremental torque decreases and becomes 0.

According to this feature, the degree of change of the yaw moment instruction value is set, depending on the elapsed time period since the incremental torque decreases and becomes 0, so that it becomes possible to execute the control of changing the yaw moment instruction value based on the incremental torque, in the situation where the improvement in the vehicle responsiveness and linear feeling based on the incremental torque during the turning manipulation of the steering wheel can exert an influence on the vehicle responsiveness and linear feeling during the turning-back manipulation of the steering wheel, thereby preventing a driver from having a feeling of strangeness.

In order to achieve the above object, according to another aspect of the present invention, there is provided a vehicle system which comprises: front road wheels and rear road wheels each provided in a vehicle; a prime mover for driving the rear road wheels; a steering device; a steering angle sensor for detecting a steering angle of the steering device; a driving state sensor for detecting a driving state of the vehicle; and a controller, wherein the controller is configured to: set, based on the driving state detected by the driving state sensor, a basic torque to be generated by the prime mover; set an incremental torque such that the basic torque is increased in accordance with an increase in the steering angle detected by the steering sensor; and control the prime mover to generate a torque which is determined by increasing the basic torque based on the incremental torque.

In the vehicle system of the present invention having the above feature, upon an increase in steering angle of the steering device, a drive torque for the rear road wheels is increased to generate a force causing the rear road wheels to be propelled forwardly with respect to the vehicle. When this force is transmitted from the rear road wheels to a vehicle body of the vehicle via a suspension, a force instantaneously acts which causes a rear end of the vehicle body to be lifted upwardly, and thus a moment arises which has a direction causing the vehicle body to be tilted forwardly, so that a force causing the vehicle body to be tilted forwardly can be generated to improve vehicle responsiveness and linear feeling with respect to turning manipulation of a steering wheel. Therefore, even when controlling a vehicle in which rear road wheels are driven by a prime mover, it becomes possible to improve vehicle responsiveness or linear feeling with respect to steering manipulation.

Preferably, in the vehicle system of the present invention, the prime mover is an internal combustion engine comprising an injector, wherein the controller is configured to control a fuel injection amount of the injector, such that the internal combustion engine generates a torque which is determined by increasing the basic torque based on the incremental torque.

Preferably, in the above vehicle system, the internal combustion engine further comprises a throttle valve, wherein the controller is configured to control an opening angle of the throttle value, such that the internal combustion engine generates a torque which is determined by increasing the basic torque based on the incremental torque.

Preferably, in the above vehicle system, the internal combustion engine further comprises a variable valve mechanism, wherein the controller is configured to control a closing timing of an intake valve of the internal combustion engine by the variable valve mechanism, such that the internal combustion engine generates a torque which is determined by increasing the basic torque based on the incremental torque.

Preferably, in the vehicle system of the present invention, the prime mover is an internal combustion engine comprising a spark plug, wherein the controller is configured to control an ignition timing of the spark plug, such that the internal combustion engine generates a torque which is determined by increasing the basic torque based on the incremental torque.

Preferably, in the vehicle system of the present invention, the prime mover is an electric motor, wherein the controller is configured to control the electric motor to generate a torque which is determined by increasing the basic torque based on the incremental torque.

Even when controlling a vehicle in which rear road wheels are driven by a prime mover, the vehicle control method and the vehicle system of the present invention can improve vehicle responsiveness or linear feeling with respect to steering manipulation.

### BRIEF DESCRIPTION OF THE SEVERAL VIEWS OF THE DRAWINGS

FIG. 1 is a block diagram depicting an overall configuration of a vehicle system according to one embodiment of the present invention.
FIG. 2 is a block diagram depicting an electrical configuration of the vehicle system according to this embodiment.
FIG. 3 is a flowchart of a vehicle attitude control processing routine for use in this embodiment.
FIG. 4 is a flowchart of an incremental torque setting processing subroutine for use in this embodiment.
FIG. 5 is a map representing a relationship between an additional acceleration and a steering speed, for use in this embodiment.
FIG. 6 is a flowchart of a decremental torque setting processing subroutine for use in this embodiment.
FIG. 7 is a map representing a relationship between an additional deceleration and a steering speed, for use in this embodiment.
FIG. 8 is a map defining a gain used to correct the decremental torque in this embodiment.
FIG. 9 depicts time charts presenting temporal changes in various parameters regarding the vehicle attitude control, as measured during turning of a vehicle employing this embodiment.
FIG. 10 depicts time charts presenting temporal changes in various parameters regarding the vehicle attitude control, as measured during turning of a vehicle employing this embodiment.
FIG. 11 depicts time charts presenting temporal changes in various parameters regarding the vehicle attitude control, as measured during turning of a vehicle employing this embodiment.
FIG. 12 depicts time charts presenting temporal changes in various parameters regarding the vehicle attitude control, as measured during turning of a vehicle employing this embodiment.
FIG. 13 is a side view depicting a change in attitude of the vehicle occurring when the vehicle attitude control employing this embodiment is executed.
FIG. 14 is a flowchart of a vehicle attitude control processing routine for use in a modification of the above embodiment.
FIG. 15 is a flowchart of a yaw moment instruction value setting processing subroutine for use in the modification of the above embodiment.
FIG. 16 depicts time charts presenting temporal changes in various parameters regarding the vehicle attitude control, as measured during turning of a vehicle employing the modification of the above embodiment.

### DETAILED DESCRIPTION OF THE INVENTION

With reference to the accompanying drawings, a vehicle control method and a vehicle system according to one embodiment of the present invention will now be described.

### < System Configuration >

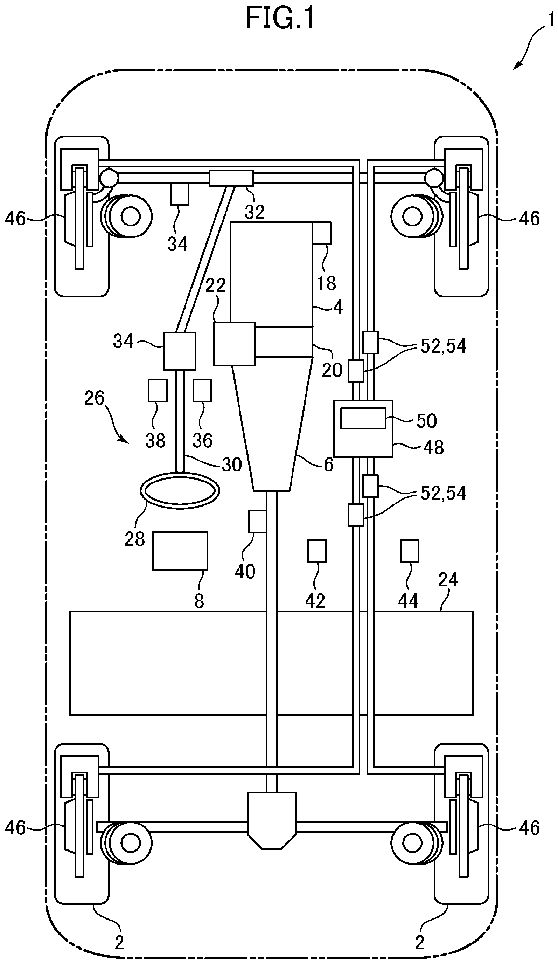

First of all, a vehicle system according to one embodiment of the present invention will be described based on FIG. 1. FIG. 1 is a block diagram depicting an overall configuration of the vehicle system according to this embodiment.

In FIG. 1, the reference sign 1 denotes a vehicle in the vehicle system according to this embodiment. The vehicle 1 is equipped with an engine 4 in a front portion of a vehicle body thereof, wherein the engine 4 serves as a prime mover for driving a pair of right and left rear road wheels among four road wheels 2. The engine 4 is an internal combustion engine such as a gasoline engine or a diesel engine. In this embodiment, the engine 4 is a gasoline engine comprising a spark plug 14. The engine 4 is disposed such that a driving force therefrom is transmitted to the rear road wheels 2 via a transmission 6, and configured to be controlled by a controller 8. The engine 4 comprises: a throttle valve 10 for adjusting an intake air amount; an injector 12 for injecting fuel; a spark plug 14; a variable valve mechanism 16 for changing an opening/closing timing of an intake/exhaust valve; and an engine speed sensor 18 for detecting an engine speed of the engine 4. The engine speed sensor 18 is operable to output a detection value thereof to the controller 8.

Further, the vehicle 1 is equipped with a motor-generator 20 having a function of driving the rear road wheels 2 (i.e., function as a prime mover) and a function of generating regenerative electric power while being driven by the rear road wheels 2 (i.e., function as a generator). The motor-generator 20 is disposed such that a driving force therefrom is transmitted to the rear road wheels 2 via the transmission 6, and configured to be controlled by a controller 8 via an inverter 22. Further, the motor-generator 20 is connected to a battery 24, and configured to be supplied with electric power from the battery 24 when it is generating the driving force, and to supply electric power to the battery 24 to charge the battery 24 during a generative event.

The vehicle 1 comprises: a steering device 26 (steering wheel 28 and others) for steering the vehicle 1; a steering angle sensor 34 for detecting a steering angle of the steering device 26, from a rotational angle of a steering column shaft 30 coupled to the steering wheel 28 or the position of a steering rack 32, in the steering device 26; an accelerator position sensor 36 for detecting a depression amount of an accelerator pedal equivalent to a relative position of the accelerator pedal (accelerator position); a brake depression amount sensor 38 for detecting a depression amount of a brake pedal (brake depression amount); a vehicle speed sensor 40 for detecting a vehicle speed; a yaw rate sensor 42 for detecting a yaw rate; and an acceleration sensor 44 for detecting an acceleration of the vehicle 1. Each of the above sensors is operable to output a detection value thereof to the controller 8. The controller 8 is constructed such that it comprises, e.g., PCM (Powertrain Control Module).

Further, the vehicle 1 comprises a brake control system 48 for supplying a brake hydraulic pressure to a wheel cylinder or a brake caliper of each of four brake units 46 (serving as a braking device) installed, respectively, in the road wheels. The brake control system 48 comprises a hydraulic pump 50 for producing a brake hydraulic pressure necessary for each of the in-wheel brake units 46 to generate a braking force. The hydraulic pump 50 is configured to be capable of producing a brake hydraulic pressure necessary for each of the in-wheel brake units 46 to generate a braking force, even when the brake pedal is not depressed. Further, the brake control system 48 comprises four valve units 52 (specifically, solenoid valves) each provided in a respective one of four hydraulic pressure supply lines connected, respectively, to the in-wheel brake units 46 and each configured to control a hydraulic pressure to be supplied from the hydraulic pump 50 to a corresponding one of the in-wheel brake units 46. For example, a valve opening of each of the valve units 52 is changed by adjusting an electric power supply amount from the battery 24 to the valve unit 52. Further, the brake control system 48 comprises four hydraulic pressure sensors 54 each for detecting a hydraulic pressure to be supplied from the hydraulic pump 50 to a respective one of the in-wheel brake units 46. Each of the hydraulic pressure sensors 54 is disposed, e.g., at a connection between a respective one of the valve units 52 and a part of the hydraulic pressure supply line located on a downstream side of the valve unit, and configured to detect a hydraulic pressure at a position just downstream of the valve unit and output a detection value to the controller 8.

The brake control system 48 is operable, based on a braking force instruction value and the detection values of the hydraulic pressure sensors 54 input from the controller 8, to calculate hydraulic pressures to be independently supplied, respectively, to the wheel cylinders or brake calipers in the road wheels, and control a pump speed of the hydraulic pump 50 and the value openings of the valve units 52.

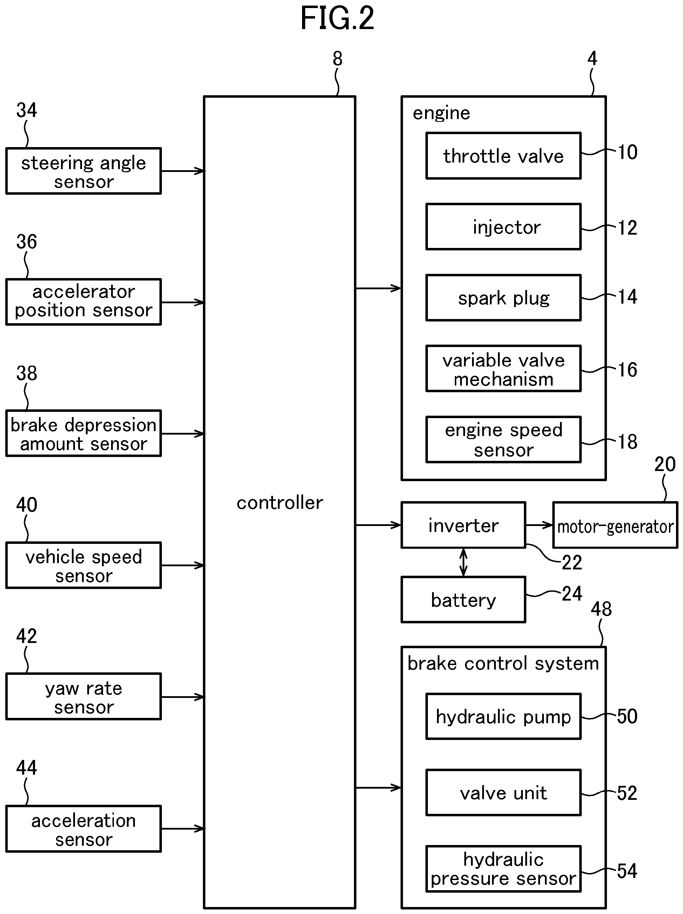

Next, with reference to FIG. 2, an electrical configuration of the vehicle system according to this embodiment will be described. FIG. 2 is a block diagram depicting the electrical configuration of the vehicle system according to this embodiment.

In this embodiment, the controller 8 is operable, based on the detection signals of the aforementioned sensors 18, 34, 36, 38, 40, 42, 44, 54, and detection signals output by various driving state sensors for detecting a driving state of the vehicle 1, to output control signals to perform control with respect to various components (such as the throttle valve 10, the injector 12, the spark plug 14, the variable valve mechanism 16, a turbocharger, and an EGR device) of the engine 4 which function as a generation torque control mechanism, the motor-generator 20, and the hydraulic pump 50 and the valve units 52 of the brake control system 48.

The controller 8 and the brake control system 48 are composed of a computer which comprises: one or more processors; various programs (including a basic control program such as an OS, and an application program capable of being activated on the OS to realize a specific function) to be interpreted and executed by the one or more processors; and an internal memory such as ROM or RAM for storing therein the programs and a variety of data.

Although the details thereof will described later, the controller 8 is equivalent to "controller" set forth in the appended claims. Further, a system comprising the front and rear road wheels 2, the engine 4, the motor-generator 20, the brake units 46, the steering angle sensor 34, the accelerator position sensor 36, and controller 8 is equivalent to "vehicle system" set forth in the appended claims.

### < Vehicle Attitude Control >

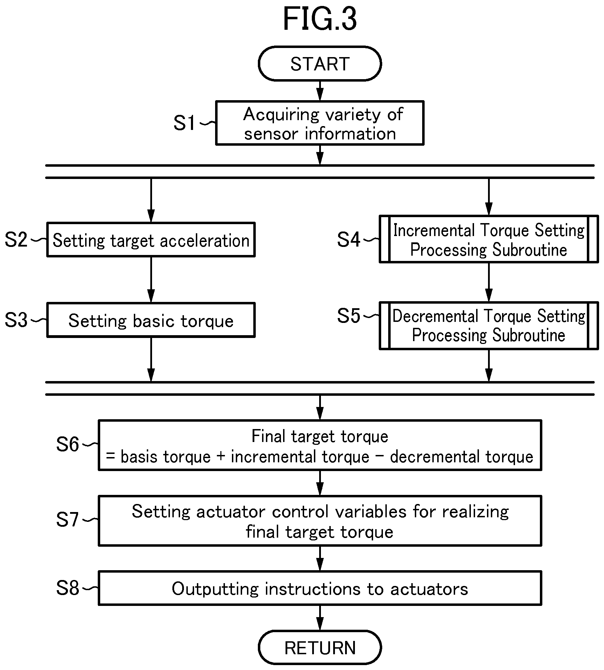

Next, a specific content of control to be executed by the vehicle system according to this embodiment will be described. First of all, with reference to FIG. 3, an overall flow of a vehicle attitude control processing routine to be executed by the vehicle system according to this embodiment will be described. FIG. 3 is a flowchart of the vehicle attitude control processing routine for use in this embodiment.

The vehicle attitude control processing routine depicted in FIG. 3 is activated when an ignition switch of the vehicle 1 is turned on and thus electric power is applied to the vehicle system, and repeatedly executed with a given period (e.g., 50 ms).

As depicted in FIG. 3, upon start of the vehicle attitude control processing routine, the controller 8 operates, in step S1, to acquire a variety of information regarding a driving state of the vehicle 1. Specifically, the controller 8 operates to acquire, as information regarding the driving state, detection signals output from the aforementioned various sensors, including: the steering angle detected by the steering angle sensor 34; the accelerator position detected by the accelerator position sensor 36; the brake depression amount detected by the brake depression amount sensor 38; the vehicle speed detected by the vehicle speed sensor 40; the yaw rate detected by the yaw rate sensor 42; the acceleration of the vehicle 1 detected by the acceleration sensor 44; the engine speed detected by the engine speed sensor 18; the hydraulic pressures detected by the hydraulic pressure sensors 54; and a speed stage currently set in the transmission 6 of the vehicle 1.

Subsequently, in step S2, the controller 8 operates to set a target acceleration, based on the driving state of the vehicle 1 acquired in the step S1. Specifically, the controller 8 operates to select, from among a plurality of acceleration characteristic maps each defining a relationship between acceleration and accelerator position, with respect to various vehicle speeds and various transmission speed stages (the maps are preliminarily created and stored in a memory or the like), one acceleration characteristic map corresponding to current values of the vehicle speed and the transmission speed stage, and refer to the selected acceleration characteristic map to set, as a target acceleration, a value of the acceleration corresponding to a current value of the accelerator position.

Subsequently, in step S3, the controller 8 operates to determine a basic torque to be generated by a prime mover (i.e., the engine 4 and the motor-generator 20) so as to realize the target acceleration set in the step S2. In this case, the controller 8 operates to determine the basic torque within a torque range outputtable by the engine 4 and the motor-generator 20, based on current values of the vehicle speed, the transmission speed stage, road grade, road surface µ, etc.

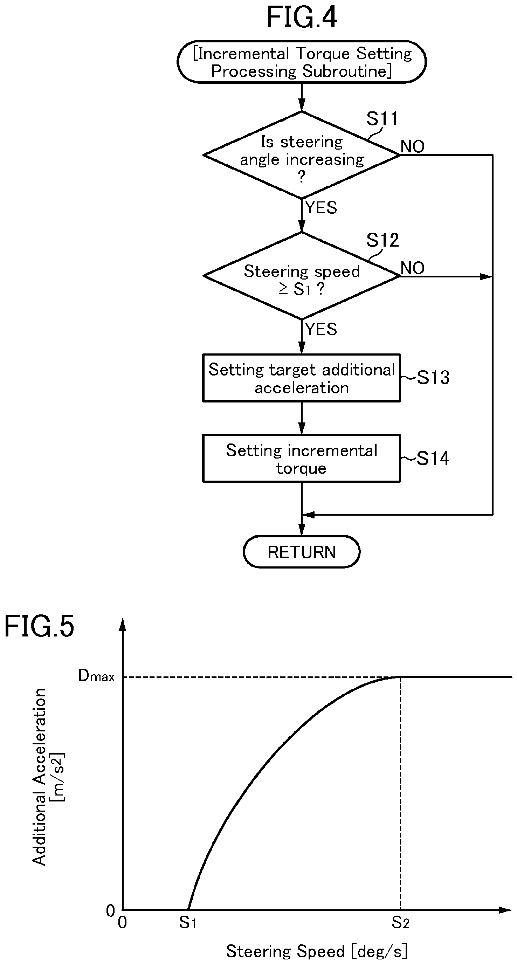

In parallel with the processings in the steps S2 and S3, in step S4, the controller 8 operates to execute an incremental torque setting processing subroutine for setting a torque for adding an acceleration to the vehicle 1, in accordance with a steering manipulation. That is, in the step S4, the incremental torque setting processing subroutine is executed to set an incremental torque such that the basic torque is increased in accordance with an increase in the steering angle of the steering device 26. This incremental torque setting processing subroutine will be described later with reference to FIGS. 4 and 5.

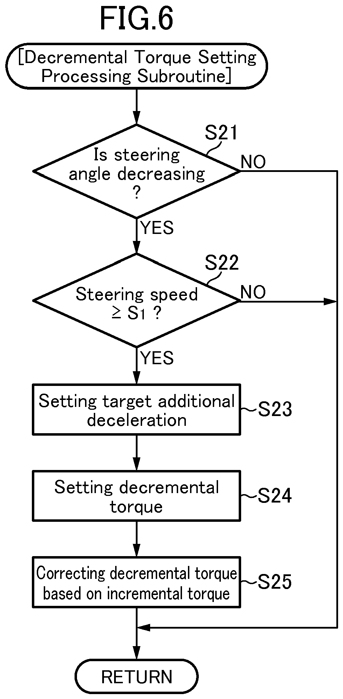

Subsequently, in step S5, the controller 8 operates to execute a decremental torque setting processing subroutine for setting a decremental torque for adding a deceleration to the vehicle 1, in accordance with the steering manipulation. That is, in the step S5, the decremental torque setting processing subroutine is executed to set the decremental torque such that the basic torque is reduced in accordance with a decrease in the steering angle of the steering device 26. This decremental torque setting processing subroutine will be described later with reference to FIGS. 6 to 8.

After executing the processings in the steps S2 and S3, the incremental torque setting processing subroutine in the step S4, and the decremental torque setting processing subroutine in the step S 5, the controller 8 operates, in step S6, to set a final target torque, based on the basic torque set in the step S3, the incremental torque set in the step S4, and the decremental torque set in the step S5. Specifically, the controller 8 operates to calculate the final target torque by adding the incremental torque to the basic torque and subtracting the decremental torque from the resulting sum.

Subsequently, in step S7, the controller 8 operates to set actuator control variables so as to realize the final target torque set in the step S6. Specifically, the controller 8 operates to determine various state amounts necessary to realize the final target torque, based on the final target torque set in the step S6, and set respective control variables of actuators for driving components of the engine 4 and the motor-generator 20, based on the determined state amounts. In this case, the controller 8 operates to set a limit value or range with respect to each of the state amounts, and set a control variable of each actuator to allow its related state amount to preserve limitation by the limit value or range.

Then, in step S8, the controller 8 operates to output control instructions to the actuators, based on the control variables set in the step S7.

For example, assuming that the engine 4 is a gasoline engine, when setting, in the step S6, the final target torque by adding the incremental torque to the basic torque, the controller 8 operates to advance the ignition timing of the spark plug 14 with respect to a point for generating the basic torque. Alternatively, in place of or in addition to the advance of the ignition timing, the controller 8 may be configured to increase the intake air amount by increasing the opening angle of the throttle valve, or by advancing the closing timing of the intake valve set after bottom dead center. In this case, the controller 8 operates to increase a fuel injection amount of the injector 12 in proportion to the increase in the intake air amount, such that a given air-fuel ratio is maintained.

On the other hand, when setting, in the step S6, the final target torque by subtracting the decremental torque from the basic torque, the controller 8 operates to retard the ignition timing of the spark plug 14 with respect to the point for generating the basic torque. Alternatively, in place of or in addition to the retard of the ignition timing, the controller 8 may be configured to reduce the intake air amount by reducing the opening angle of the throttle valve, or retarding the closing timing of the intake valve set after bottom dead center. In this case, the controller 8 operates to reduce the fuel injection amount of the injector 12 in proportion to the decrease in the intake air amount, such that a given air-fuel ratio is maintained.

Further, assuming that the engine 4 is a diesel engine, when setting, in the step S6, the final target torque by adding the incremental torque to the basic torque, the controller 8 operates to increase the fuel injection amount of the injector 12 with respect to a value for generating the basic torque. On the other hand, when setting, in the step S6, the final target torque by subtracting the decremental torque from the basic torque, the controller 8 operates to reduce the fuel injection amount of the injector 12 with respect to the value for generating the basic torque.

Alternatively, in place of or in addition to the above control of the engine 4, the controller 8 may be configured to control the motor-generator 20 to realize the final target torque set in the step S6. Specifically, when setting, in the step S6, the final target torque by adding the incremental torque to the basic torque, the controller 8 operates to set an inverter instruction value (control signal) such that a torque to be generated by the motor-generator 20 is increased, and output the inverter instruction value to the inverter 22. On the other hand, when the final target torque set in the step S6 by subtracting the decremental torque from the basic torque has a negative value, the controller 8 operates to set the inverter instruction value (control signal) such that the motor-generator 20 performs regenerative power generation to generate a regenerative torque, and output the inverter instruction value to the inverter 22.

After the step S8, the controller 8 operates to terminate the vehicle attitude control processing routine.

Next, with respect to FIGS. 4 and 5, the incremental torque setting processing subroutine for use in this embodiment will be described.

FIG. 4 is a flowchart of the incremental torque setting processing subroutine for use in this embodiment, and FIG. 5 is a map representing a relationship between an additional acceleration and a steering speed, for use in this embodiment.

Upon start of the incremental torque setting processing subroutine, in step S11, the controller 8 operates to determine whether or not the steering angle (absolute value) of the steering device 26 is increasing (i.e., during turning manipulation of the steering wheel 28).

As a result, when the steering angle is determined to be increasing, the subroutine proceeds to step S12. In the step S12, the controller 8 operates to determine whether or not a steering speed is equal to or greater than a given threshold S₁. Specifically, the controller 8 operates to calculate a steering speed based on steering angles sequentially acquired from the steering angle sensor 34 in the step S1 of the vehicle attitude control processing routine shown in FIG. 3, and determine whether or not a calculated value of the steering speed is equal to or greater than the threshold S₁.

As a result, when the steering speed is determined to be equal to or greater than the threshold S₁, the subroutine proceeds to step S13. In the step S13, the controller 8 operates to set a target additional acceleration based on the steering speed. This target additional acceleration means an acceleration to be added to the vehicle 1 according to the steering manipulation so as to control vehicle attitude in conformity with the intention of a driver.

Specifically, based on the relationship between the additional acceleration and the steering speed defined in the map in FIG. 5, the controller 8 operates to set, as the target additional acceleration, a value of the additional acceleration corresponding to the steering speed calculated in step S12.

In FIG. 5, the horizontal axis represents the steering speed, and the vertical axis represents the additional acceleration. As depicted in FIG. 5, when the steering speed is less than the threshold S₁, a corresponding value of the additional acceleration is 0. That is, when the steering speed is less than the threshold S₁, the controller 8 operates to avoid performing control of adding an acceleration to the vehicle 1 in accordance with the steering manipulation.

On the other hand, when the steering speed is equal to or greater than the threshold S₁, a value of the additional acceleration corresponding to this steering speed gradually comes closer to a given upper limit value Dₘₐₓ. That is, as the steering speed becomes higher, the additional acceleration becomes larger, and an increase rate of the additional acceleration becomes smaller. This upper limit value Dₘₐₓ is set at a level (e.g., 0.5 m/s² ≒ 0.05 G) that a driver does not feel control intervention even when the acceleration is added to the vehicle 1 in response to the steering manipulation.

Further, when the steering speed is equal to or greater than a threshold S₂ greater than the threshold S₁, the additional acceleration is maintained at the upper limit value Dₘₐₓ.

Subsequently, in step S14, the controller 8 operates to set the incremental torque, based on the target additional acceleration set in the step S13. Specifically, the controller 8 operates to determine, based on current values of the vehicle speed, the transmission speed stage, the road grade, etc., acquired in the step S1 shown in FIG. 3, a value of the incremental torque necessary to increase the basic torque so as to realize the target additional acceleration.

After the step S14, the controller 8 operates to terminate the incremental torque setting processing subroutine and return to the main routine.

On the other hands, when, in the step S11, the steering angle is determined not to be increasing, or, in the step S12, the steering speed is determined to be less than the threshold S₁, the controller 8 operates to terminate the incremental torque setting processing subroutine without setting the incremental torque, and return to the main routine in FIG. 3. In this case, the incremental torque is 0.

Next, with respect to FIGS. 6 to 8, the decremental torque setting processing subroutine for use in this embodiment will be described.

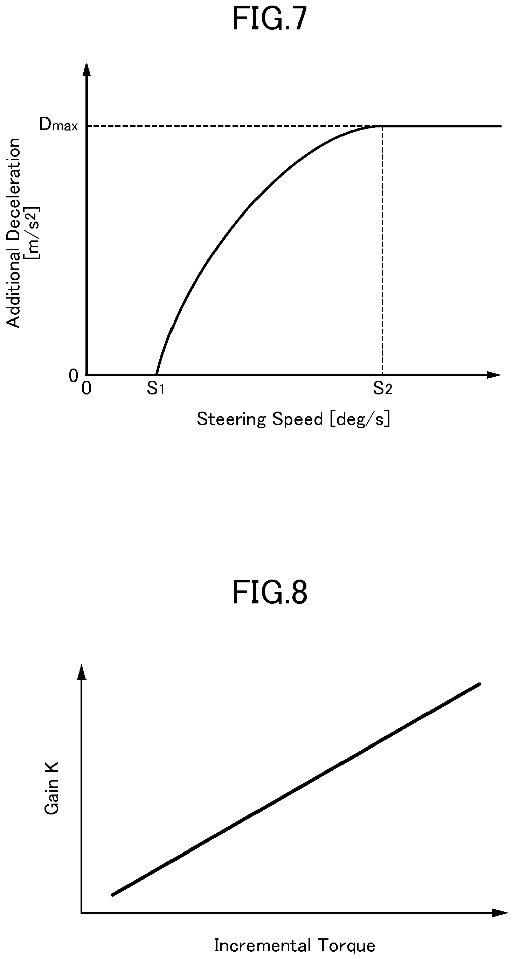

FIG. 6 is a flowchart of the decremental torque setting processing subroutine for use in this embodiment. FIG. 7 is a map representing a relationship between an additional deceleration and the steering speed, for use in this embodiment, and FIG. 8 is a map defining a gain used to correct the decremental torque in this embodiment.

Upon start of the decremental torque setting processing subroutine, in step S21, the controller 8 operates to determine whether or not the steering angle (absolute value) of the steering device 26 is decreasing (i.e., the steering wheel 28 is being turned back).

As a result, when the steering angle is determined to be decreasing, the subroutine proceeds to step S22. In the step S22, the controller 8 operates to determine whether or not the steering speed is equal to or greater than a given threshold S₁. Specifically, the controller 8 operates to calculate the steering speed based on steering angles sequentially acquired from the steering angle sensor 34 in the step S1 of the vehicle attitude control processing routine shown in FIG. 3, and determine whether or not a calculated value of the steering speed is equal to or greater than the threshold S₁.

As a result, when the steering speed is determined to be equal to or greater than the threshold S₁, the subroutine proceeds to step S23. In the step S23, the controller 8 operates to set a target additional deceleration based on the steering speed. This target additional deceleration means a deceleration to be added to the vehicle 1 according to the steering manipulation so as to control vehicle attitude in conformity with the intention of a driver.

Specifically, based on the relationship between the additional deceleration and the steering speed defined in the map in FIG. 7, the controller 8 operates to set, as the target additional deceleration, a value of the additional deceleration corresponding to the steering speed calculated in step S22. In FIG. 7, the horizontal axis represents the steering speed, and the vertical axis represents the additional deceleration. As depicted in FIG. 7, when the steering speed is less than the threshold S₁, a corresponding value of the additional deceleration is 0. That is, when the steering speed is less than the threshold S₁, the controller 8 operates to avoid performing control of adding a deceleration to the vehicle 1 in accordance with the steering manipulation.

On the other hand, when the steering speed is equal to or greater than the threshold S₁, a value of the additional deceleration corresponding to this steering speed gradually comes closer to a given upper limit value Dₘₐₓ, as the steering speed becomes higher. That is, as the steering speed becomes higher, the additional deceleration becomes larger, and an increase rate of the additional deceleration becomes smaller. This upper limit value Dₘₐₓ is set at a level (e.g., 0.5 m/s² ≒ 0.05 G) that a driver does not feel control intervention even when the deceleration is added to the vehicle 1 in response to the steering manipulation.

Further, when the steering speed is equal to or greater than a threshold S₂ greater than the threshold S₁, the additional deceleration is maintained at the upper limit value Dₘₐₓ.

Subsequently, in step S24, the controller 8 operates to set the decremental torque, based on the target additional deceleration set on the step S23. Specifically, the controller 8 operates to determine, based on current values of the vehicle speed, the transmission speed stage, the road grade, etc., acquired in the step S1, a value of the decremental torque necessary to reduce the basic torque so as to realize the target additional deceleration.

Subsequently, in step S25, the controller 8 operates to correct the decremental torque set in the step S24 according to a subsequent decrease in the steering angle, based on the incremental torque used when increasing the basic torque in accordance with the increase in the steering angle. Specifically, when setting the incremental torque in accordance with the increase in the steering angle during the vehicle attitude control processing routine, the controller 8 also operates to store, in a memory, the set incremental torque (e.g., all values of the incremental torque set in the period from start to end of the increase in the steering angle, an average of or a maximum value among the values of the incremental torque, etc.). Subsequently, when the steering angle starts to decrease, and the decremental torque is set in the step S24 of the decremental torque setting processing subroutine, the controller 8 operates, in the step S25, to refer to the incremental torque stored in the memory and correct, based on the incremental torque, the decremental torque set in the step S24. The incremental torque stored in the memory will be reset when the steering angle starts to increase next.

With reference to the map of FIG. 8, a relationship between the incremental torque and a correction amount of the decremental torque will be described. This map is preliminarily created and stored in a memory or the like. In FIG. 8, the horizontal axis represents the incremental torque, and the horizontal axis represents a gain K. This gain is set such that it become larger when the incremental torque is relatively large, as compared to when the incremental torque is not relatively large, and is used to multiply the decremental torque set in the step S24. That is, a value obtained by multiplying the decremental torque set in the step S24, by the gain K, is used as a corrected decremental torque in the step S25.

Alternatively, the correction of the decremental torque may be performed based on an elapsed time period after the incremental torque becomes 0 upon end of the increase in the steering angle during the vehicle attitude control processing routine through until the steering angle starts to decrease. Specifically, the controller 8 may be configured to, when the elapsed time period after the incremental torque becomes 0 upon end of the increase in the steering angle through until the steering angle starts to decrease is equal to or less than a given time period (e.g., 2 seconds), correct the decremental torque set in the step S24, by the correction gain K based on the map in FIG. 8, and to, when the elapsed time period is greater than the given time period, use the decremental torque set in the step S24 directly without correcting the decremental torque. Alternatively, the map in FIG. 8 may be set such that the correction gain K comes closer to 1 (i.e., the degree of change of the decremental torque become smaller) when the elapsed time period after the incremental torque becomes 0 upon end of the increase in the steering angle through until the steering angle starts to decrease is relatively long, as compared to when the elapsed time period is not relatively long.

After the step S25, the controller 8 operates to terminate the decremental torque setting processing subroutine and return to the main routine in FIG. 3.

On the other hands, when, in the step S21, the steering angle is determined not to be decreasing, or, in the step S22, the steering speed is determined to be less than the threshold S₁, the controller 8 operates to terminate the decremental torque setting processing subroutine without setting the decremental torque, and return to the main routine in FIG. 3. In this case, the decremental torque is 0.

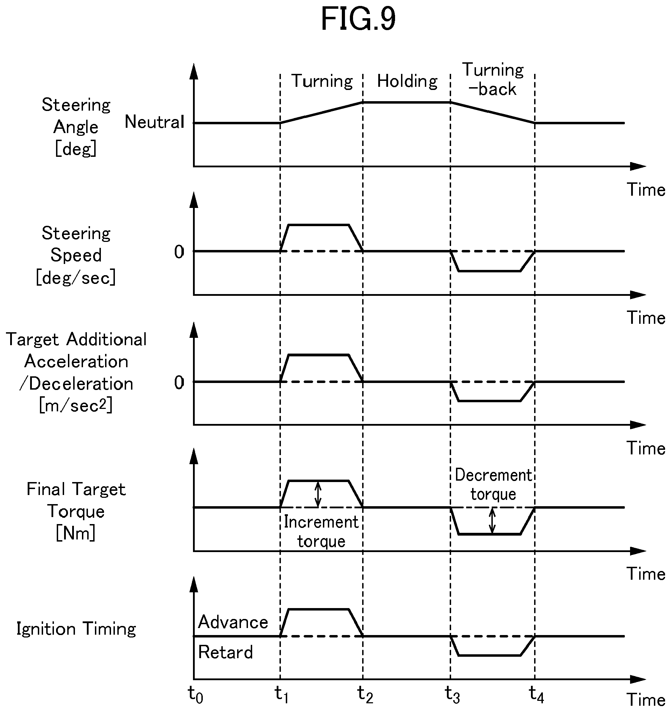

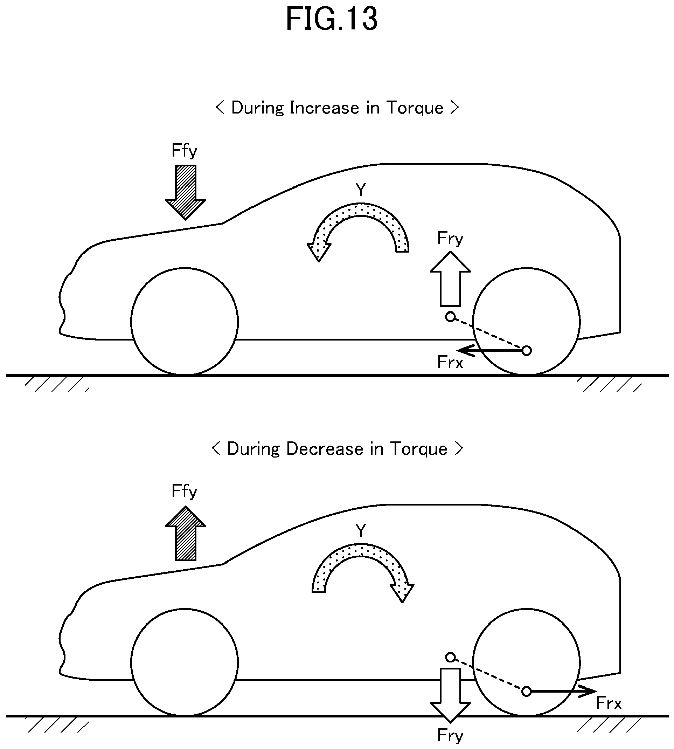

Next, with reference to FIGS. 9 to 13, functions of the vehicle control method and the vehicle system according to this embodiment will be described. FIGS. 9 to 12 depict time charts presenting temporal changes in various parameters regarding the vehicle attitude control, as measured during turning of the vehicle 1 employing this embodiment, and FIG. 13 is a side view depicting a change in attitude of the vehicle 1 occurring when the vehicle attitude control employing this embodiment is executed.

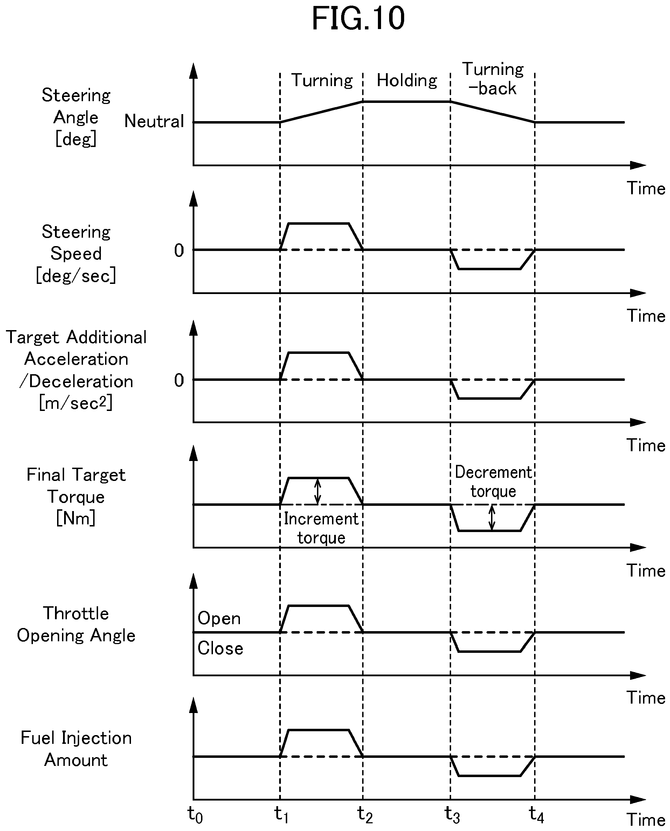

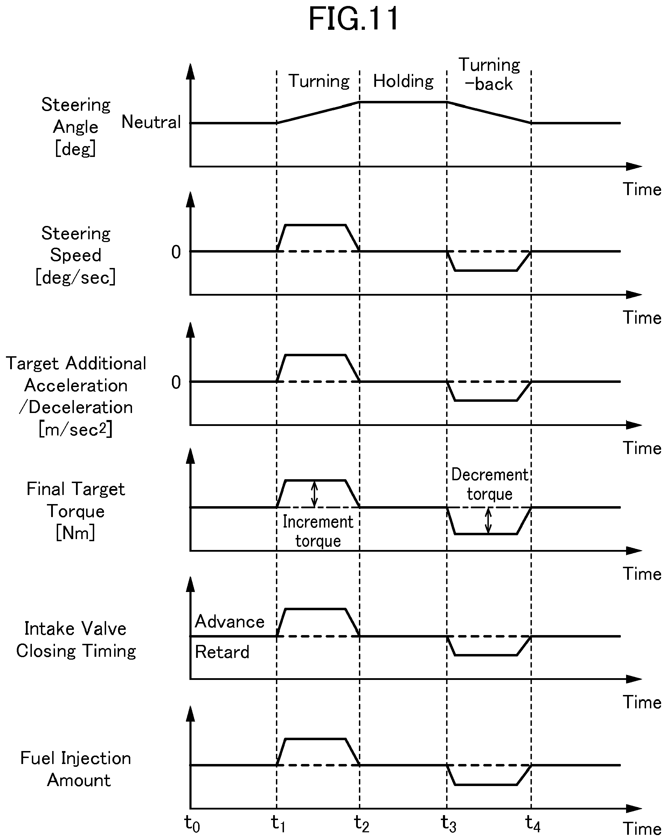

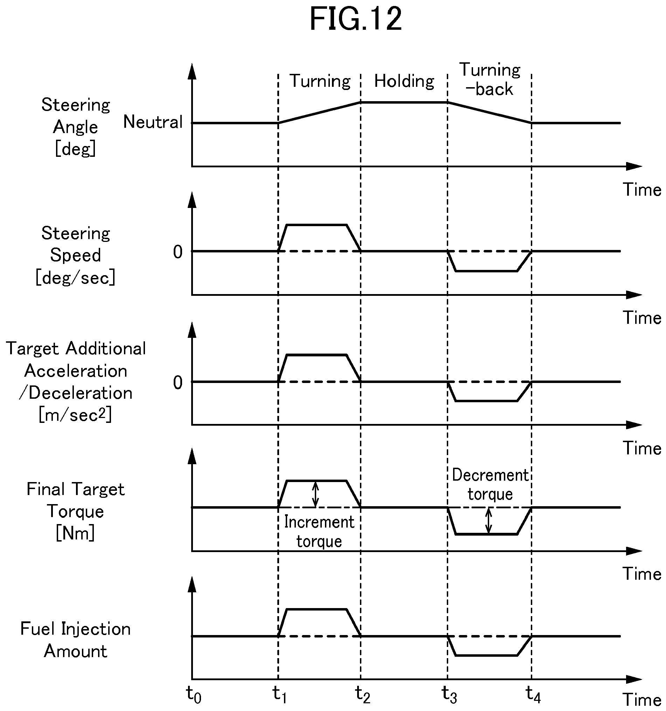

The time charts in FIG. 9 represent, in order from top to bottom, the steering angle [deg] of the steering device 26, the steering speed [deg/sec], the target additional acceleration/deceleration [m/sec³], the final target torque [N · m], and the ignition timing, respectively. The time charts in FIG. 10 represent, in order from top to bottom, the steering angle [deg] of the steering device 26, the steering speed [deg/sec], the target additional acceleration/deceleration [m/sec²], the final target torque [N · m], the throttle opening angle, and the fuel injection amount, respectively. The time charts in FIG. 11 represent, in order from top to bottom, the steering angle [deg] of the steering device 26, the steering speed [deg/sec], the target additional acceleration/deceleration [m/sec²], the final target torque [N · m], the intake valve closing timing, and the fuel injection amount, respectively. The time charts in FIG. 12 represent, in order from top to bottom, the steering angle [deg] of the steering device 26, the steering speed [deg/sec], the target additional acceleration/deceleration [m/sec²], the final target torque [N · m], and the fuel injection amount, respectively. In FIGS. 9 to 12, with regard to the time charts representing the final target torque, the basic torque [N · m] is indicated by the one-dot chain line. It should be noted here that FIGS. 9 to 12 show an example where the basic torque is constant in the period from time t₀ to time t₄.

First of all, in FIGS. 9 to 12, during the period from the time t₀ to the time t₁, a driver of the vehicle 1 does not perform any steering manipulation, so that the steering angle is kept at 0 [deg] (neutral position) and thus the steering speed is also kept at 0 [deg/sec]. In this state, the setting of the incremental torque and the decremental torque is not performed in the incremental torque setting processing subroutine in FIG. 4 and the decremental torque setting processing subroutine in FIG. 6 (the target additional acceleration = 0, the incremental torque = 0, the target additional deceleration = 0, and the decremental torque = 0). Therefore, during the period from the time t₀ to the time t₁, the basic torque is determined as the final target torque, and control variables (the ignition timing, the throttle opening angle, the intake valve closing timing, the fuel injection amount, etc.) of various actuators are set so as to output the basic torque.

Subsequently, at the time t₁ in FIGS. 9 to 12, when the driver starts the turning manipulation of the steering wheel 28, the steering angle and (the absolute value of) the steering speed start to increase. In the incremental torque setting processing subroutine in FIG. 4, when the steering speed becomes equal to or greater than the threshold S₁, the processings of the steps S11 to S14 are repeated to repeatedly perform the setting of the target additional acceleration and the incremental torque. That is, in the step S13 shown in FIG. 4, the target additional acceleration is set based on the steering speed, using the map depicted in FIG. 5, and, in the step S14, the incremental torque necessary to realize the target additional acceleration is set. Then, in the step S6 shown in FIG. 3, a value obtained by adding the incremental torque to the basic torque is set as the final target torque.

Assuming that the engine 4 is a gasoline engine, as shown in FIG. 9, in order to enable a torque determined by increasing the basic torque based on the incremental torque to be generated during the period from the time t₁ to time t₂ in FIGS. 9 to 11, the ignition timing of the spark plug 14 is advanced with respect to the point for generating the basic torque, in the step S7 shown in FIG. 3. Alternatively, in place of or in addition to the advance of the ignition timing, the opening angle of the throttle valve may be increased as shown in FIG. 10, or the closing timing of the intake valve set after bottom dead center may be advanced as shown in FIG. 11, so as to increase the intake air amount. In this case, as shown in FIGS. 10 and 11, the fuel injection amount of the injector 12 is increased in proportion to the increase in the intake air amount, such that a given air-fuel ratio is maintained.

Further, assuming that the engine 4 is a diesel engine, in order to enable the torque determined by increasing the basic torque based on the incremental torque to be generated during the period from the time t₁ to the time t₂ in FIG. 12, the fuel injection amount of the injector 12 is increased with respect to the value for generating the basic torque, in the step S7 shown in FIG. 3.

Alternatively, in place of or in addition to the above control of the engine 4, in order to enable the torque determined by increasing the basic torque based on the incremental torque to be generated during the period from the time t₁ to the time t₂ in FIGS. 9 to 12, the inverter instruction value (control signal) may be set such that a torque to be generated by the motor-generator 20 is increased, in the step S7 shown in FIG. 3.

When the torque determined by increasing the basic torque based on the incremental torque is generated during the period from the time t₁ to the time t₂ in FIGS. 9 to 12, the increased torque is transmitted to the rear road wheels 2 as drive wheels to serve as a force Frx causing the rear road wheels 2 to be propelled forwardly with respect to the vehicle, as depicted in FIG. 13. When this force Frx is transmitted from the rear road wheels to the vehicle body of the vehicle 1 via a suspension, a force Fry acts which causes a rear end of the vehicle body to be lifted upwardly, instantaneously (e.g., within 300 msec from start of the increase in torque), and thus a moment Y arises which has a direction causing the vehicle body to be tilted forwardly, so that a force Ffy acts which causes a front end of the vehicle body to be sunk downwardly, and, due to the sinking of the front end of the vehicle body, a load on the front road wheels (front road wheel load) is increased. This makes it possible to improve responsiveness of the vehicle 1 or linear feeling with respect to the turning manipulation of the steering wheel. That is, in the rear-wheel-drive vehicle, when a driving torque for the rear road wheels 2 is increased to give an acceleration to the vehicle, an inertial force causing the vehicle body to be tilted rearwardly and an instantaneous force causing the vehicle body to be tilted forwardly are generated. However, the instantaneous force generated based on the incremental torque to cause the vehicle body to be tilted forwardly is deemed to dominantly contribute to the vehicle responsiveness and linear feeling with respect to the turning manipulation of the steering wheel.

Subsequently, when the turning manipulation is shifted to a steered position-holding state at the time t₂ in FIGS. 9 to 12, the steering angle becomes a constant value. In this state, the setting of the incremental torque and the decremental torque is not performed in the incremental torque setting processing subroutine in FIG. 4 and the decremental torque setting processing subroutine in FIG. 6 (the target additional acceleration = 0, the incremental torque = 0, the target additional deceleration = 0, and the decremental torque = 0). Therefore, during the period from the time t₂ to time t₃, the basic torque is determined as the final target torque, and control variables (the ignition timing, the throttle opening angle, the intake valve closing timing, the fuel injection amount, etc.) of various actuators are set so as to output the basic torque.

Subsequently, at the time t₃ in FIGS. 9 to 12, when the driver starts the turning-back manipulation of the steering wheel 28, the steering angle decreases, and (the absolute value of) the steering speed increases. In the decremental torque setting processing subroutine in FIG. 6, when (the absolute value of) the steering speed becomes equal to or greater than the threshold S₁, the processings of the steps S21 to S25 are repeated to repeatedly perform the setting of the target additional deceleration and the decremental torque. That is, in the step S23 shown in FIG. 6, the target additional deceleration is set based on the steering speed, using the map depicted in FIG. 7, and, in the step S24, the decremental torque necessary to realize the target additional deceleration is set. Then, in the step S25, the decremental torque is corrected based on the incremental torque set during the period from the time t₁ to the time t₂. Then, in the step S6 shown in FIG. 3, a value obtained by subtracting the corrected decremental torque from the basic torque is set as the final target torque.

Assuming that the engine 4 is a gasoline engine, as shown in FIG. 9, in order to enable a torque determined by reducing the basic torque based on the decremental torque to be generated during the period from the time t₃ to time t₄ in FIGS. 9 to 11, the ignition timing of the spark plug 14 is retarded with respect to the point for generating the basic torque, in the step S7 in FIG. 3. Alternatively, in place of or in addition to the retard of the ignition timing, the opening angle of the throttle valve may be reduced as shown in FIG. 10, or the closing timing of the intake valve may be retarded as shown in FIG. 11, so as to reduce the intake air amount. In this case, as shown in FIGS. 10 and 11, the fuel injection amount of the injector 12 is reduced in proportion to the decrease in the intake air amount, such that a given air-fuel ratio is maintained.

Further, assuming that the engine 4 is a diesel engine, in order to enable the torque determined by reducing the basic torque based on the decremental torque to be generated during the period from the time t₃ to the time t₄ in FIG. 12, the fuel injection amount of the injector 12 is reduced with respect to the value for generating the basic torque, in the step S7 in FIG. 3.

Alternatively, in place of or in addition to the above control of the engine 4, in order to enable the torque determined by reducing the basic torque based on the decremental torque to be generated during the period from the time t₃ to the time t₄ in FIGS. 9 to 12, the inverter instruction value (control signal) may be set such that a torque to be generated by the motor-generator 20 is reduced, in the step S7 in FIG. 3. On the other hand, when the final target torque set by subtracting the decremental torque from the basic torque has a negative value, the inverter instruction value (control signal) is set such that the motor-generator 20 performs regenerative power generation to generate a regenerative torque.

When the torque determined by reducing the basic torque based on the decremental torque is generated during the period from the time t₃ to the time t₄ in FIGS. 9 to 12, the reduced torque is transmitted to the rear road wheels 2 as drive wheels to serve as a force Frx causing the rear road wheels 2 to be pulled rearwardly with respect to the vehicle, as depicted in FIG. 13. When this force Frx is transmitted from the rear road wheels 2 to the vehicle body of the vehicle 1 via the suspension, a force Fry instantaneously acts which causes the rear end of the vehicle body to be sunk downwardly, and thus a moment Y arises which has a direction causing the vehicle body to be tilted rearwardly, so that a force Ffy acts which causes the front end of the vehicle body to be lifted upwardly, as depicted in FIG. 13, and, due to the lifting of the front end of the vehicle body, the front road wheel load is reduced. This makes it possible to improve the vehicle responsiveness or linear feeling with respect to the turning-back manipulation of the steering wheel. That is, in the rear-wheel-drive vehicle, when a driving torque for the rear road wheels 2 is reduced to give a deceleration to the vehicle, an inertial force causing the vehicle body to be tilted forwardly and an instantaneous force causing the vehicle body to be tilted rearwardly are generated. However, the instantaneous force generated based on the decremental torque to cause the vehicle body to be tilted rearwardly is deemed to dominantly contribute to the vehicle responsiveness and linear feeling with respect to the turning-back manipulation of the steering wheel.

Subsequently, when the steering angle is returned to 0 and the turning-back manipulation is shifted to a steered position-holding state (the steering speed = 0) at the time t₄ in FIGS. 9 to 12, the steering speed becomes 0, and thereby values of the target additional acceleration and the target additional deceleration also become 0. Thus, the value of the basic torque is determined as the target final torque.

In the example depicted in FIGS. 9 to 12, the basic torque is maintained at a constant value. However, when the basic torque is changed due to manipulation of the accelerator pedal or the like by the driver, the incremental torque or decremental torque is added to or reduced from the basic torque. Actually, however, a time period from turning to turning-back of the steering wheel 28 by the driver through the steered position-holding state is generally relatively short (typically less than 1 to 2 sec), so that the basic torque can be deemed to be constant during this time period.

### < Functions/Effects >

Next, functions/effects of this embodiment will be described.

In this embodiment, the controller 8 is configured to set the incremental torque in accordance with the increase in the steering angle of the steering device 26, and control the prime mover to generate a torque which is determined by increasing the basic torque based on the incremental torque. Thus, when the turning manipulation of the steering device 26 is performed, the driving torque for the rear road wheels 2 can be increased to generate a force causing the vehicle body to be tilted forwardly, so that it becomes possible to improve the vehicle responsiveness and linear feeling with respect to the turning manipulation of the steering wheel.

In this embodiment, the controller 8 is operable to set the decremental torque in accordance with the decrease in the steering angle of the steering device 26, and control the prime mover to generate a torque which is determined by reducing the basic torque based on the decremental torque. Thus, when the turning-back manipulation of the steering device 26 is performed, the driving torque for the rear road wheels 2 can be reduced to generate a force causing the vehicle body to be tilted rearwardly, so that it becomes possible to improve the vehicle responsiveness and linear feeling with respect to the turning-back manipulation of the steering wheel.

Further, in this embodiment, the controller 8 is operable, based on the incremental torque used when increasing the basic torque in accordance with the increase in the steering angle, to change (correct) the decremental torque set according to a subsequent decrease in the steering angle, so that it becomes possible to adjust a balance between an improvement in the vehicle responsiveness and linear feeling based on the incremental torque during the turning manipulation of the steering wheel and an improvement in the vehicle responsiveness and linear feeling based on the decremental torque during the turning-back manipulation of the steering wheel, thereby preventing a driver from having a feeling of strangeness.

Further, in this embodiment, the controller 8 is operable, when the steering angle of the steering device 26 starts to decrease within a given time period after the incremental torque decreases and becomes 0, to execute processing of changing the decremental torque based on the incremental torque, so that it becomes possible to execute the control of changing the decremental torque based on the incremental torque, in a situation where the improvement in the vehicle responsiveness and linear feeling based on the incremental torque during the turning manipulation of the steering wheel can exert an influence on the vehicle responsiveness and linear feeling during the turning-back manipulation of the steering wheel, thereby preventing a driver from having a feeling of strangeness.

Further, in this embodiment, the controller 8 is operable to set the degree of change of the decremental torque, depending on an elapsed time period since the incremental torque decreases and becomes 0, so that it becomes possible to execute the processing of changing the decremental torque based on the incremental torque, in the situation where the improvement in the vehicle responsiveness and linear feeling based on the incremental torque during the turning manipulation of the steering wheel can exert an influence on the vehicle responsiveness and linear feeling during the turning-back manipulation of the steering wheel, thereby preventing a driver from having a feeling of strangeness.

### < Modification >

Next, a modification of the above embodiment will be described. In the following, the description about the same configuration and processing as those on the above embodiment will be appropriately omitted. That is, any configuration and processing which will not be particularly described here are the same as those in the above embodiment.

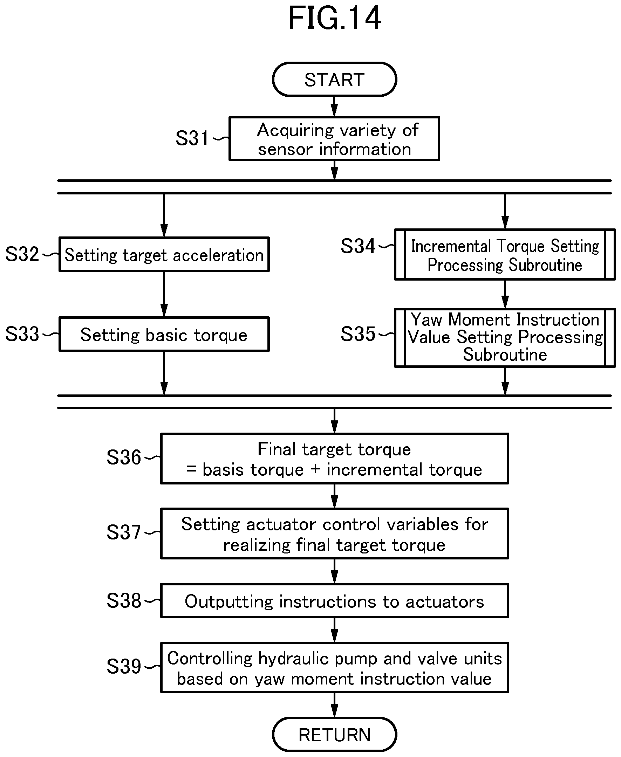

First of all, with reference to FIG. 14, a vehicle attitude control processing routine for use in the modification of the above embodiment will be described. FIG. 14 is a flowchart of the vehicle attitude control processing routine for use in the modification of the above embodiment.

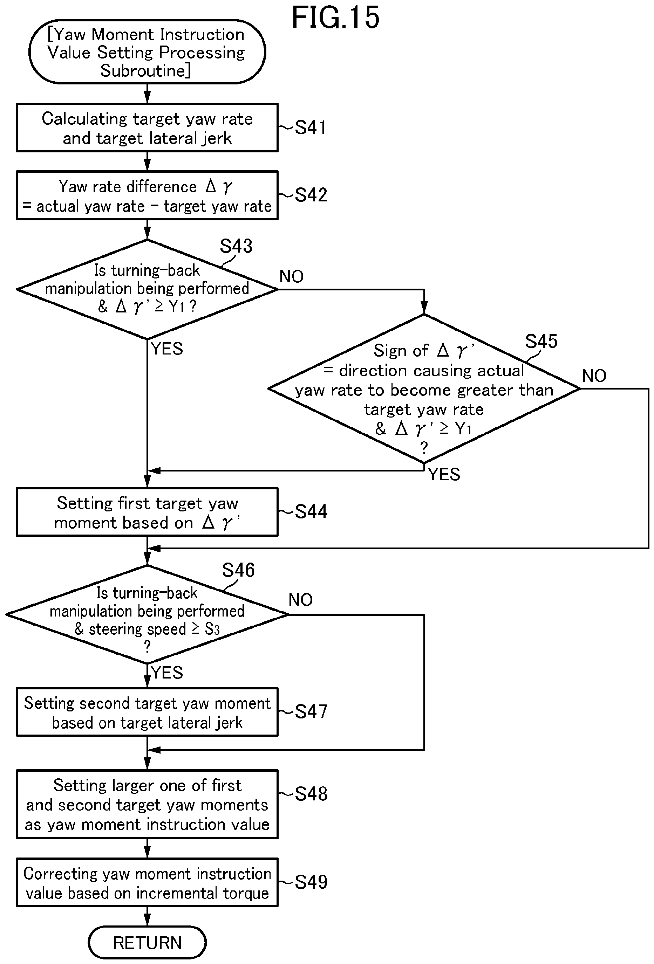

In this modification, after executing the incremental torque setting processing subroutine in step S34, a yaw moment instruction value setting processing subroutine is executed in step S35, in place of the decremental torque setting processing subroutine in the step S5 shown in FIG. 3. Specifically, in the step S35, a yaw moment instruction value setting step of setting, in accordance with a decrease in the steering angle of the steering device 26, a yaw moment instruction value indicative of a rotational direction opposite to that of a yaw rate which is actually generated in the vehicle 1 is executed. This yaw moment instruction value setting processing subroutine will be described later with reference to FIG. 15.

After executing the processings in steps S32 and S33, the incremental torque setting processing subroutine in step S34 and the yaw moment instruction value setting processing subroutine in the step S35, the controller 8 operates, in step S36, to set the final target torque, based in the basis torque set in the step S33, and the incremental torque set in the step 34. Specifically, the controller 8 operates to calculate the final target torque by adding the incremental torque to the basic torque.

Subsequently, in step S37, the controller 8 operates to set the actuator control variables so as to realize the final target torque set in the step S36. Then, in step S38, the controller 8 operates to output control instructions to the actuators, based on the control variables set in the step S37. The detailed contents of the controls of the engine 4 and the motor-generator 20 in the steps S37 and S38 are the same as those in the steps S7 and S8 shown in FIG. 3

Subsequently, in step S38, the brake control system 48 operates to control the brake units 46 based on the yaw moment instruction value set in the step S35. The brake control system 48 preliminarily stores a map defining a relationship between a yaw moment instruction value and a pump speed of the hydraulic pump 50, and is operable to refer to this map to operate the hydraulic pump 50 at a pump speed corresponding to the yaw moment instruction value set in the step S35 (e.g., to increase the pump speed of the hydraulic pump 50 up to a value corresponding to the instruction value, by increasing electric power to be supplied to the hydraulic pump 50).

Alternatively, for example, the brake control system 48 may preliminarily store a map defining a relationship between a yaw moment instruction value and the valve opening of each of the valve units 52, and may be configured to refer to this map to control each of the valve units 52, individually, such that the valve opening thereof is set to a degree corresponding to the yaw moment instruction value (e.g., to increase the valve opening of each of the solenoid valves up to a degree corresponding to the instruction value, by increasing electric power to be supplied to each of the solenoid valves), thereby adjusting a braking force for each road wheel.

After the step S39, the controller 8 operates to terminate the vehicle attitude control processing routine.

Next, with reference to FIG. 15, the yaw moment instruction value setting processing subroutine will be described.

As shown in FIG. 15, upon start of the yaw moment instruction value setting processing subroutine, the controller 8 operates, in step S41, to calculate a target yaw rate and a target lateral jerk, based on the steering angle and the vehicle speed acquired in the step S1 of the vehicle attitude control processing routine in FIG. 3.

Specifically, the controller 8 operates to calculate the target yaw rate by multiplying the steering angle by a coefficient according to the vehicle speed. Further, the controller 8 operates to calculate the target lateral jerk, based on the steering speed and the vehicle speed.

Subsequently, in step S42, the controller 8 operates to calculate a difference (yaw rate difference) Δγ between the yaw rate (actual yaw rate) detected by the yaw rate sensor 42 and acquired in the step S1 of the vehicle attitude control processing routine in FIG. 3, and the target yaw rate calculated in the step S41.

Subsequently, in step S43, the controller 8 operates to determine whether or not the turning-back manipulation of the steering wheel 28 is being performed (i.e., the steering angle is decreasing), and a yaw rate difference change rate Δγ' obtained by temporally differentiating the yaw rate difference Δγ is equal to or greater than a given threshold Y₁. As a result, when the turning-back manipulation is determined to be being performed and the yaw rate difference change rate Δγ' is determined to be equal to or greater than the threshold Y₁, the subroutine proceeds to step S44. In the step S44, the controller 8 operates to set, based on the yaw rate difference change rate Δγ', a yaw moment oriented in a direction opposite to that of the actual yaw rate of the vehicle 1, as a first target yaw moment. Specifically, the controller 8 operates to calculate the magnitude of the first target yaw moment by multiplying the yaw rate difference change rate Δγ' by a given coefficient Cₘ₁.

On the other hand, in the step S43, when the turning-back manipulation of the steering wheel 28 is determined not to be being performed (i.e., the steering angle is constant or is increasing), the subroutine proceeds to step S45. In the step S45, the controller 8 operates to determine whether or not the yaw rate difference change rate Δγ' is changing in a direction causing the actual yaw rate to become greater than the target yaw rate (i.e., in a direction causing behavior of the vehicle 1 to exhibit an oversteer tendency), and the yaw rate difference change rate Δγ' is equal to or greater than the threshold Y₁. Specifically, when the yaw rate difference is decreasing in a situation where the target yaw rate is equal to or greater than the actual yaw rate, or when the yaw rate difference is increasing in a situation where the target yaw rate is less than the actual yaw rate, the controller 8 operates to determine that the yaw rate difference change rate Δγ' is changing in the direction causing the actual yaw rate to become greater than the target yaw rate.

As a result, when the yaw rate difference change rate Δγ' is changing in the direction causing the actual yaw rate to become greater than the target yaw rate, and the yaw rate difference change rate Δγ' is equal to or greater than the threshold Y₁, the subroutine proceeds to the step S44. In the step S44, the controller 8 operates to set, based on the yaw rate difference change rate Δy', a yaw moment oriented in a direction opposite to that of the actual yaw rate of the vehicle 1, as the first target yaw moment.

On the other hand, in the step S45, when the yaw rate difference change rate Δγ' is determined not to be changing in the direction causing the actual yaw rate to become greater than the target yaw rate, or the yaw rate difference change rate Δγ' is determined to be less than the threshold Y₁, the controller 8 operates to avoid setting the first target yaw moment. In this case, the first target yaw moment is 0.

After the step S44, or, when, in the step S45, the yaw rate difference change rate Δγ' is determined not to be changing in the direction causing the actual yaw rate to become greater than the target yaw rate, or the yaw rate difference change rate Δγ' is determined to be less than the threshold Y₁, the subroutine proceeds to step S46. In the step S46, the controller 8 operates to determine whether or not the turning-back manipulation of the steering wheel 28 is being performed (i.e., the steering angle is decreasing), and the steering speed is equal to or greater than a given threshold S₃.

As a result, when the turning-back manipulation is determined to be being performed, and the steering speed is determined to be equal to or greater than the given threshold S₃, the subroutine proceeds to step S47. In the step S47, the controller 8 operates to set, based on the target lateral jerk calculated in the step S41, a yaw moment oriented in a direction opposite to that of the actual yaw rate of the vehicle 1, as a second target yaw moment. Specifically, the controller 8 operates to calculate the magnitude of the second target yaw moment by multiplying the target lateral jerk by a given positive coefficient Cₘ₂. At this moment, the turning-back manipulation of the steering wheel 28 is being performed, so that the target lateral jerk has a direction opposite to the turning direction of the vehicle 1. Thus, the second target yaw moment obtained by multiplying such a target lateral jerk by the given positive coefficient Cₘ₂ is a moment oriented in a direction opposite to the actual yaw rate of the vehicle 1.

On the other hand, in the step S46, when the turning-back manipulation of the steering wheel 28 is determined not to be being performed (i.e., the steering angle is constant or is increasing), or the steering speed is determined to be less than the given threshold S₃, the controller operates to avoid setting the second target yaw moment. In this case, the second target yaw moment is 0.

After the step S47 or, when, in the step S59, the turning-back manipulation of the steering wheel 28 is determined not to be being performed (i.e., the steering angle is constant or is increasing), or the steering speed is determined to be less than the given threshold S₃, the subroutine proceeds to step S48. In the step S48, the controller 8 operates to set a larger one of the first target yaw moment set in the step S44 and the second target yaw moment set in the step S47, as the yaw moment instruction value.

Subsequently, in step S49, the controller 8 operates to correct the yaw moment instruction value set in the step S44 according to a subsequent decrease in the steering angle, based on the incremental torque used when increasing the basic torque in accordance with the increase in the steering angle. Specifically, when setting the incremental torque in accordance with the increase in the steering angle during the vehicle attitude control processing routine, the controller 8 also operates to store, in a memory, the set incremental torque (e.g., all values of the incremental torque set in the period from start to end of the increase in the steering angle, an average of or a maximum value among the values of the incremental torque, etc.). Subsequently, when the steering angle starts to decrease, and the yaw moment instruction value is set in the step S48 of the yaw moment instruction value setting processing subroutine, the controller 8 operates, in the step S49, to refer to the incremental torque stored in the memory, and correct, based on the incremental torque, the yaw moment instruction value set in the step S48. The incremental torque stored in the memory will be reset when the steering angle starts to increase next.

Specifically, the controller 8 operates to correct the yaw moment instruction value such that the yaw moment instruction value becomes larger when the incremental torque set by increasing the basic torque in accordance with the increase in the steering angle based on is relatively large, as compared to when the incremental torque is not relatively large.

Alternatively, the controller 8 may be configured to correct the yaw moment instruction value, based on an elapsed time period after the incremental torque becomes 0 upon end of the increase in the steering angle during the vehicle attitude control processing routine through until the steering angle starts to decrease. Specifically, the controller 8 may be configured to, when the elapsed time period after the incremental torque becomes 0 upon end of the increase in the steering angle through until the steering angle starts to decrease is equal to or less than a given time period (e.g., 2 seconds), correct the yaw moment instruction value set in the step S48, based on the incremental torque, and to, when the elapsed time period is greater than the given time period, use the yaw moment instruction value set in the step S48 directly without correcting the yaw moment instruction value. Alternatively, the degree of change of the yaw moment instruction value may be set to become smaller when the elapsed time period after the incremental torque becomes 0 upon end of the increase in the steering angle through until the steering angle starts to decrease is relatively long, as compared to when the elapsed time period is not relatively long.

After the step S49, the controller 8 operates to terminate the yaw moment instruction value setting processing subroutine and return to the main routine.

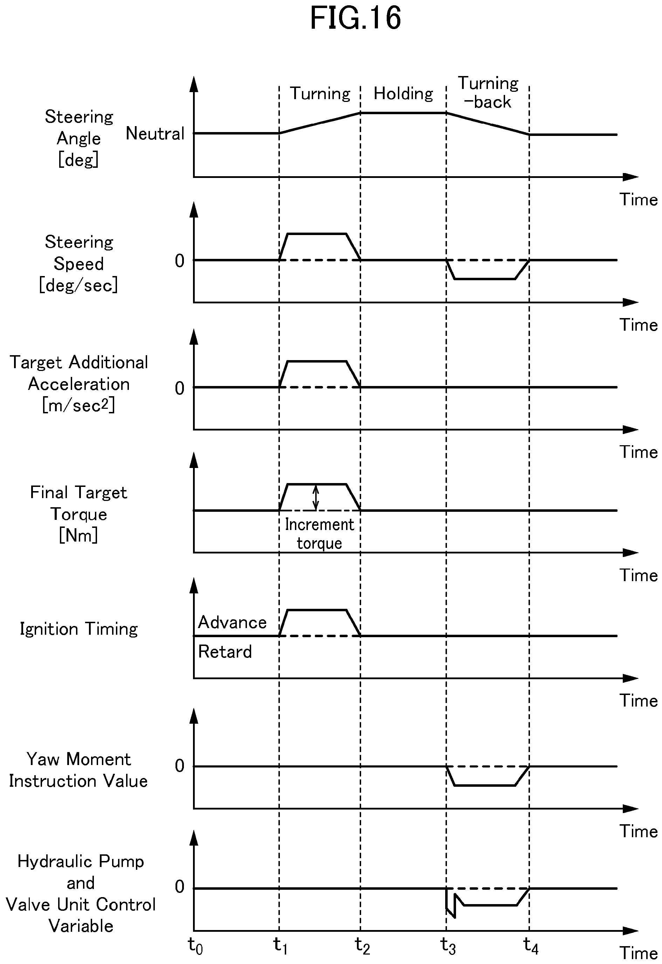

Next, with reference to FIG. 16, functions of a vehicle control method and a vehicle system according to the modification of the above embodiment will be described. FIG. 16 depicts time charts presenting temporal changes in various parameters regarding the vehicle attitude control, as measured during turning of the vehicle 1 employing the modification of the above embodiment.

The time charts in FIG. 16 represent, in order from top to bottom, the steering angle [deg] of the steering device 26, the steering speed [deg/sec], the target additional acceleration [m/sec³], the final target torque [N · m], the ignition timing, the yaw moment instruction value, and the hydraulic pump and value unit control variable, respectively. Further, with regard to the time chart representing the final target torque, the basic torque [N · m] is indicated by the one-dot chain line. It should be noted here that FIG. 16 shows an example where the basic torque is constant in the period from time t₀ to time t₄. Although FIG. 16 shows only the ignition timing as an example of a control variable for controlling torque to be generated by the engine 4, the torque to be generated by the engine 4 can also be controlled by changing the throttle opening angle, the intake valve closing timing, and/or the fuel injection amount, as with FIGS. 9 to 12 in the above embodiment.

First of all, in FIG. 16, during the period from time t₀ to time t₁, a driver of the vehicle 1 does not perform any steering manipulation, so that the steering angle is kept at 0 [deg] (neutral position) and thus the steering speed is also kept at 0 [deg/sec]. In this state, the setting of the incremental torque and the yaw moment instruction value is not performed in the incremental torque setting processing subroutine in FIG. 4 and the yaw moment instruction value setting processing subroutine in FIG.15 (the target additional acceleration = 0, the incremental torque = 0, and the yaw moment instruction valve = 0). Therefore, during the period from the time t₀ to the time t₁, the basic torque is determined as the final target torque, and control variables (the ignition timing, the throttle opening angle, the intake valve closing timing, the fuel injection amount, etc.) of various actuators are set so as to output the basic torque.

Subsequently, in FIG. 16, at the time t₁, when the driver starts the turning manipulation of the steering wheel 28, the steering angle and (the absolute value of) the steering speed start to increase. When the steering speed becomes equal to or greater than S₁, in the incremental torque setting processing subroutine in FIG. 4, the processings of the steps S11 to S14 are repeated to repeatedly perform the setting of the target additional acceleration and the incremental torque. Specifically, in the step S13 shown in FIG. 4, the target additional acceleration is set based on the steering speed by using the map presented in FIG. 5, and a value of the incremental torque necessary to realize the target additional acceleration is set in the step S14 shown in FIG. 4. Then, a value obtained by adding the set incremental torque to the basic torque is set as a final target torque in the step S36 shown in FIG. 14, and the actuator control variables for realizing the final target torque is set in the step S37 shown in FIG. 14. Then, the control of the actuators is executed based on the set control variables in the step S38 shown in FIG. 14.

Subsequently, when the turning manipulation is shifted to a steered position-holding state at the time t₂ in FIG. 16, the steering angle becomes a constant value. In this state, the setting of the incremental torque and the yaw moment instruction value is not performed in the incremental torque setting processing subroutine in FIG. 4 and the yaw moment instruction value setting processing subroutine in FIG. 14 (the target additional acceleration = 0, the incremental torque = 0, and the yaw moment instruction value = 1). Therefore, during the period from the time t₂ to time t₃, the basic torque is determined as the final target torque, and control variables (the ignition timing, the throttle opening angle, the intake valve closing timing, the fuel injection amount, etc.) of various actuators are set so as to output the basic torque.

Further, at the time t₃ in FIG. 16, when the driver starts the turning-back manipulation of the steering wheel 28, the steering angle decreases, and (the absolute value of) the steering speed increases. In this situation, in the yaw moment instruction value setting processing subroutine in FIG. 15, the processings of the steps S41 to S49 are repeated to repeatedly perform the setting of the yaw moment instruction value. Specifically, the yaw moment instruction value is set in the step S48 shown in FIG. 15, and corrected in the step 49 by the incremental torque set during the time t₁ to the time t₂. Then, in the step S48 shown in FIG. 39 shown in FIG. 14, the control of giving a yaw moment based on the yaw moment instruction value is performed.

In a typical example, when a condition that the steering manipulation is the turning-back manipulation, and the steering speed is equal to or greater than the threshold S₃ is satisfied (step S46 in FIG. 15: YES), the controller 8 operates to set the second target yaw moment based on the target lateral jerk which is proportional to the steering speed (step S47 in FIG. 15) and set the second target yaw moment as the yaw moment instruction value (step S48 in FIG. 15). Then, after correcting the yaw moment instruction value based on the incremental torque set during the turning manipulation (step S49 in FIG. 15), the brake control system 48 operates to control the hydraulic pump 50 and the valve units 52, based on the yaw moment instruction value (step S39 in FIG. 14). In this process, as shown in FIG. 16, during the period after the turning yaw moment instruction value starts to increase from 0 at the time t₃ through until a given rising time period elapses, the brake control system 48 operates to control the hydraulic pump 50 and the valve units 52, based on a value obtained by adding a given offset value to the yaw moment instruction value. This makes it possible to quickly raise a braking force upon start of the turning-back manipulation of the steering wheel, thereby quickly giving a desired yaw moment to the vehicle 1 to improve cornering performance.

Subsequently, when the turning manipulation is shifted to a steered position-holding state (steering speed = 0) at the time t₄ in FIG. 16, the steering speed becomes 0, and thus the values of the target additional acceleration and the yaw moment instruction value also become 0. Thus, the value of the basic torque is determined as the final target torque.

### < Functions/Effects >

Next, functions/effects of the modification of the above embodiment will be described.

In the modification of the above embodiment, the controller 8 operates to set, in accordance with a decrease in the steering angle of the steering device 26, the yaw moment instruction value indicative of a rotation direction opposite to that of a yaw rate which is actually generated in the vehicle, and control the braking device, based on the yaw moment instruction value. Thus, upon turning-back manipulation of the steering device 26, a yaw moment oriented in a direction suppressing turning of the vehicle 1 can be generated, so that it becomes possible to improve the vehicle responsiveness and linear feeling with respect to turning-back manipulation of the steering wheel.

In the modification of the above embodiment, the controller 8 operates to change (correct), based on the incremental torque used when increasing the basic torque in accordance with the increase in the steering angle, the yaw moment instruction value set according to a subsequent decrease in the steering angle, so that it becomes possible to adjust a balance between an improvement in the vehicle responsiveness and linear feeling based on the incremental torque during the turning manipulation of the steering wheel and an improvement in the vehicle responsiveness and linear feeling based on the decremental torque during the turning-back manipulation of the steering wheel, thereby preventing a driver from having a feeling of strangeness.

In the modification of the above embodiment, the controller 8 operates to execute control of changing the yaw moment instruction value based on the incremental torque, when the steering angle of the steering device 26 starts to decrease within a given time period after the incremental torque decreases and becomes 0, so that it becomes possible to execute the control of changing the yaw moment instruction value based on the incremental torque, in a situation where the improvement in the vehicle responsiveness and linear feeling based on the incremental torque during the turning manipulation of the steering wheel can exert an influence on the vehicle responsiveness and linear feeling during the turning-back manipulation of the steering wheel, thereby preventing a driver from having a feeling of strangeness.

In the modification of the above embodiment, the controller 8 operates to set the degree of change of the yaw moment instruction value, depending on the elapsed time period since the incremental torque decreases and becomes 0, so that it becomes possible to execute the control of changing the yaw moment instruction value based on the incremental torque, in the situation where the improvement in the vehicle responsiveness and linear feeling based on the incremental torque during the turning manipulation of the steering wheel can exert an influence on the vehicle responsiveness and linear feeling during the turning-back manipulation of the steering wheel, thereby preventing a driver from having a feeling of strangeness.

### < Other Modifications >

Although the above embodiment and the modification thereof have been described based on an example where the attitude control of the vehicle 1 is executed using the steering angle of the vehicle 1, the attitude control may be executed based on a yaw rate or a lateral acceleration, instead of the steering angle. Further, although the above embodiment has been described based on an example where the attitude control of the vehicle 1 is executed using the steering speed of the vehicle 1, the attitude control may be executed based on a yaw acceleration or a lateral jerk, instead of the steering speed.

### LIST OF REFERENCE SIGNS

1: vehicle
2: rear road wheel
4: engine
8: controller
10: throttle valve
12: injector
14: spark plug
16: variable valve mechanism
18: engine speed sensor
20: motor-generator
26: steering device
34: steering angle sensor
36: accelerator position sensor
38: brake depression amount sensor
40: vehicle speed sensor
42: yaw rate sensor
44: acceleration sensor
46: brake unit

## Claims

1. A method of controlling a vehicle in which rear road wheels among a set of road wheels are driven by a prime mover, comprising:
a basic torque setting step of setting a basic torque to be generated by the prime mover, based on a driving state of the vehicle;
an incremental torque setting step of setting an incremental torque such that the basic torque is increased in accordance with an increase in steering angle of a steering device equipped in the vehicle; and
a torque generation step of controlling the prime mover to generate a torque which is determined by increasing the basic torque based on the incremental torque.

2. The method according to claim 1, wherein the prime mover is an internal combustion engine comprising an injector, and wherein the torque generation step includes controlling a fuel injection amount of the injector, such that the internal combustion engine generates the torque which is determined by increasing the basic torque based on the incremental torque.

3. The method according to claim 2, wherein the internal combustion engine further comprises a throttle valve, and wherein the torque generation step includes controlling an opening angle of the throttle value, such that the internal combustion engine generates the torque which is determined by increasing the basic torque based on the incremental torque.

4. The method according to claim 2 or 3, wherein the internal combustion engine further comprises a variable valve mechanism, and wherein the torque generation step includes controlling a closing timing of an intake valve of the internal combustion engine by the variable valve mechanism, such that the internal combustion engine generates the torque which is determined by increasing the basic torque based on the incremental torque.

5. The method according to any one of claims 1 to 4, wherein the prime mover is an internal combustion engine comprising a spark plug, and wherein the torque generation step includes controlling an ignition timing of the spark plug, such that the internal combustion engine generates the torque which is determined by increasing the basic torque based on the incremental torque.

6. The method according to of claim 1, wherein the prime mover is an electric motor, and wherein the torque generation step includes controlling the electric motor to generate the torque which is determined by increasing the basic torque based on the incremental torque.

7. The method according to any one of claims 1 to 6, which further comprises:
a decremental torque setting step of setting a decremental torque such that the basic torque is reduced in accordance with a decrease in the steering angle of the steering device; and
a second torque generation step of controlling the prime mover to generate a torque which is determined by reducing the basic torque based on the decremental torque.

8. The method according to claim 7, which further comprises a decremental torque changing step of changing the decremental torque set in the decremental torque setting step, based on the incremental torque set in the incremental torque setting step.

9. The method according to claim 8, wherein the decremental torque changing step is performed when the steering angle of the steering device starts to decrease within a given time period after the incremental torque decreases and becomes 0.

10. The method according to claim 8, wherein the decremental torque changing step includes setting a degree of change of the decremental torque, depending on an elapsed time period since the incremental torque decreases and becomes 0.

11. The method according to any one of claims 1 to 6, wherein the vehicle is further equipped with a braking device configured to apply a braking force to the road wheels, and wherein the method further comprises:
a yaw moment instruction value setting step of setting, in accordance with a decrease in the steering angle of the steering device, a yaw moment instruction value corresponding to a yaw moment oriented in a direction opposite to that of a yaw rate being actually generated in the vehicle; and
a yaw control step of controlling the braking device based on the yaw moment instruction value.

12. The method according to claim 11, which further comprises a yaw moment instruction value changing step of changing the yaw moment instruction value set in the yaw moment instruction value setting step, based on the incremental torque set in the incremental torque setting step.

13. The method according to claim 12, wherein the yaw moment instruction value changing step is performed when the steering angle of the steering device starts to decrease within a given time period after the incremental torque decreases and becomes 0.

14. The method according to claim 12, wherein the yaw moment instruction value changing step includes setting a degree of change of the yaw moment instruction value, depending on an elapsed time period since the incremental torque decreases and becomes 0.

15. A vehicle system, comprising:
front road wheels and rear road wheels each provided in a vehicle;
a prime mover configured to drive the rear road wheels;
a steering device;
a steering angle sensor configured to detect a steering angle of the steering device;
a driving state sensor configured to detect a driving state of the vehicle; and
a controller,
wherein the controller is configured to:
set a basic torque to be generated by the prime mover, based on the driving state detected by the driving state sensor;
set an incremental torque such that the basic torque is increased in accordance with an increase in the steering angle detected by the steering sensor; and
control the prime mover to generate a torque which is determined by increasing the basic torque based on the incremental torque.

16. The vehicle system according to claim 15, wherein the prime mover is an internal combustion engine comprising an injector, and wherein the controller is configured to control a fuel injection amount of the injector, such that the internal combustion engine generates the torque which is determined by increasing the basic torque based on the incremental torque.

17. The vehicle system according to claim 16, wherein the internal combustion engine further comprises a throttle valve, and wherein the controller is configured to control an opening angle of the throttle value, such that the internal combustion engine generates the torque which is determined by increasing the basic torque based on the incremental torque.

18. The vehicle system according to claim 16 or 17, wherein the internal combustion engine further comprises a variable valve mechanism, and wherein the controller is configured to control a closing timing of an intake valve of the internal combustion engine by the variable valve mechanism, such that the internal combustion engine generates the torque which is determined by increasing the basic torque based on the incremental torque.

19. The vehicle system according to any one of claims 15 to 18, wherein the prime mover is an internal combustion engine comprising a spark plug, and wherein the controller is configured to control an ignition timing of the spark plug, such that the internal combustion engine generates the torque which is determined by increasing the basic torque based on the incremental torque.

20. The vehicle system according to claim 15, wherein the prime mover is an electric motor, and wherein the controller is configured to control the electric motor to generate the torque which is determined by increasing the basic torque based on the incremental torque.
